(19) Europäisches Patentamt
European Patent Office
Office européen des brevets

(11) Publication number: 0 157 472 B1

(12) EUROPEAN PATENT SPECIFICATION

(45) Date of publication of patent specification: **07.03.90**

(51) Int. Cl.[5]: **C 08 F 10/00**, C 08 F 4/64

(21) Application number: **85300682.3**

(22) Date of filing: **31.01.85**

(54) **Process for polymerization of olefins.**

(30) Priority: **31.01.84 JP 14486/84**

(43) Date of publication of application:
**09.10.85 Bulletin 85/41**

(45) Publication of the grant of the patent:
**07.03.90 Bulletin 90/10**

(84) Designated Contracting States:
**BE DE FR GB NL**

(56) References cited:
**EP-A-0 035 889**
**US-A-4 324 690**
**CHEMICAL ABSTRACTS, vol. 92, no. 2, January 1980, page 20, no. 7208g, Columbus, Ohio, US; & JP - A - 79 119 388 (ASAHI CHEMICAL INDUSTRY CO., LTD.) 17-09-1979**
**CHEMICAL ABSTRACTS, vol. 100, no. 18, 30th April 1984, page 10, no. 139777k, Columbus, Ohio, US; & JP - A - 58 198 503 (TOA NENRYO KOGYO K.K.) 18-11-1983**

**The file contains technical information submitted after the application was filed and not included in this specification**

(73) Proprietor: **TOA NENRYO KOGYO KABUSHIKI KAISHA**
**1-1 Hitotsubashi, 1-Chome Chiyoda-Ku**
**Tokyo 100 (JP)**

(72) Inventor: **Fujita, Masahito**
**1902-5, Ooaza Kamekubo Ooi-machi**
**Iruma-gun Saitama-ken (JP)**
Inventor: **Miyazaki, Makoto**
**4-3, Yanagi-cho**
**Sakado-shi Saitama-ken (JP)**
Inventor: **Nagashima, Yukio**
**1902-5, Ooaza Kamekubo Ooi-machi**
**Iruma-gun Saitama-ken (JP)**
Inventor: **Kizaki, Masami**
**384-1, Ooaza Makafukuoka**
**Kamifukuoka-shi Saitama-ken (JP)**
Inventor: **Shinbori, Yuichi**
**8-5, Chuo 1-chome Nishi-ku**
**Yokohama-shi Kanagawa-ken (JP)**
Inventor: **Inaba, Naomi**
**894-2-1-401, Ooaza Kozutsumi**
**Kawagoe-shi Saitama-ken (JP)**

(74) Representative: **Northover, Robert Frank et al**
**ESSO Chemical Limited Esso Chemical Research Centre P.O. Box 1**
**Abingdon Oxfordshire, OX13 6BB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 157 472 B1

Courier Press, Leamington Spa, England.

**Description**

The present invention relates to a process for the polymerization of olefins, more particularly to a process for the highly stereoregular polymerization of alpha-olefins, and to a catalyst useful in such process.

There are known processes for the highly stereoregular polymerization of olefins, particularly alpha-olefins having three or more carbon atoms, by using a solid catalyst component composed essentially of magnesium, titanium, halogen, and an electron donor compound, and there have been proposed many methods for producing the catalyst component used for the polymerization. The cocatalyst component used for the polymerization of olefins is usually a combination of an organoaluminum compound and an electron donor compound. The electron donor compound is usually an ester of an organic acid.

Recently, there has been proposed a new polymerization process that employs, in place of an ester of an organic acid, an electron donor compound containing a hetero atom such as nitrogen-containing compounds (e.g., piperidine, pyridine, nicotinic ester, etc.), sulfur-containing compounds (e.g., thiophenic ester, etc.), and phosphorus-containing compounds (e.g., phosphite compounds, phosphate compounds, etc.). The catalyst system used in this process is not so improved in its catalytic performance as compared with the conventional systems comprising an organoaluminum compound and an ester of an organic acid.

Recently, there has been developed a new catalyst system in which the solid catalyst component is combined with a cocatalyst composed of an organoaluminum compound, a sterically hindered Lewis base and a Lewis base having no steric hindrance. (See Japanese Patent Laid-open No. 139511/1981). This catalyst system exhibits high catalytic activity and high stereoregularity; but it does not outperform the catalyst system containing the conventional cocatalyst.

There is disclosed in Japanese Patent Laid-open No. 138706/1983 a process for polymerizing olefins in the presence of a catalyst composed of a titanium catalyst component, an organoaluminum compound, and a heterocyclic compound containing nitrogen or oxygen, said titanium catalyst component being composed essentially of magnesium, titanium, a halogen, and an electron donor compound which is an ester selected from esters of polyfunctional compounds, esters of monocarboxylic acid having a branched chain group or a ring-containing chain group, and carbonate esters. This catalyst system, however, is not yet satisfactory in catalytic activity. US—A—4324690 is concerned with catalysts for stereospecific polymerization of alpha olefins which comprise an organoaluminum component, a halogen containing titanium (IV) compound, an organic electron donor, and a pretreatment product of components comprising magnesium alcoholate, organo silicon compound, and optionally one or more Group II or III metal alkyls or pretreatment modifiers such as organic acids or esters. The organosilicon compound employed in producing the magnesium containing pretreatment product may be a silane of formula $R_x Si X_{4-x}$ where R is hydrocarbyl, x is 1—4 and X is halogen (preferably chlorine) or (alternatively) hydrogen. Preferred organo silicon compounds which are taught in US—A—4 324 690 include tetramethylsilane, trimethylhydrogensilane, tri-n-propylchlorosilane, dimethyldichlorosilane and mono-n-hexyltrichlorosilane, none of which constitutes a compound containing both a halogen-silicon bond and a hydrogen-silicon bond. The specific Examples use polymethylhydrogensiloxane or dimethyldichlorosilane.

Chemical Abstracts, Volume 92 No. 2, January 1980, page 20, No. 7208 g and JP—A—79119388 disclose highly active stereospecific polymerization catalyst components prepared by reaction of magnesium compounds containing alkyl, alkoxy and/or silyloxy groups with chlorohydrosilanes. The magnesium compounds disclosed, though, are based on magnesium dichloride which is treated with butanol in solution to yield a product which is poor in butoxy concentration, (BuO/Mg mol ratio is 0.5) and is therefore not magnesium dibutoxide.

It is an object of this invention to provide a catalyst and process for the polymerization of olefins which makes it possible to produce in high yields olefin polymers having high stereoregularity. The present inventors previously developed a catalyst component obtained by contacting a magnesium alkoxide, a silicon compound having the hydrogen-silicon bond, an electron donor compound, and a titanium compound with one another, said catalyst component providing in high yields olefin polymers having high stereoregularity and high bulk density. (See Japanese Patent Laid-open No. 198503/1983). It has now been found that the object of this invention can be achieved when the above-mentioned catalyst component is combined with an organic compound of a metal of Group I to III in the Periodic Table and a Lewis base having steric hindrance.

According to the present invention there is provided a catalyst comprising:

(A) a titanium containing catalyst component obtained by contacting:

1. a magnesium dihydrocarbyloxide of the formula Mg(OR)(OR′), where R and R′ are alkyl, alkenyl, cycloalkyl, aryl or aralkyl groups having 1 to 20 carbon atom,
2. a silicon compound having a hydrogen-silicon bond,
3. an electron donor, and
4. a titanium compound,

(B) an organic compound of a metal in Groups I to III of the Periodic Table, and

(C) a sterically hindered Lewis base characterised in that the silicon compound is a chlorosilane.

The invention also extends to a process for the polymerization or copolymerization of olefins which comprises (co)polymerizing the olefin(s) in the presence of such a catalyst.

Raw materials of catalyst component

The raw materials used for the preparation of the catalyst component in this invention are described below:

(1) Magnesium dihydrocarbyloxide

The magnesium dihydrocarbyloxide used in this invention is represented by the formula Mg(OR)(OR'), where R and R' are alkyl, alkenyl, cycloalkyl, aryl, or aralkyl groups having 1 to 20 carbon atoms, preferably 1 to 10 carbon atoms, and R and R' may be the same or different.

These compounds include, for example, $Mg(OCH_3)_2$, $Mg(OC_2H_5)_2$, $Mg(OCH_3)(OC_2H_5)$, $Mg(Oi{-}C_3H_7)_2$, $Mg(OC_3H_7)_2$, $Mg(OC_4H_9)_2$, $Mg(Oi{-}C_4H_9)_2$, $Mg(OC_4H_9)(O{-}iC_4H_9)$, $Mg(OC_4H_9)(Osec{-}C_4H_9)$, $Mg(OC_6H_{13})_2$, $Mg(OC_8H_{17})_2$, $Mg(OC_6H_{11})_2$, $Mg(OC_6H_5)_2$, $Mg(OC_6H_4CH_3)_2$, and $Mg(OCH_2C_6H_5)_2$.

These magnesium dihydrocarbyloxides should preferably be dried before use, and more preferably be dried with heating under reduced pressure. They may be commercial ones or may be synthesized by the known method.

Prior to use, these magnesium dihydrocarbyloxides may be preliminarily contacted with an inorganic or organic inert solid substance.

Suitable examples of the inorganic solid substance include metal sulfate, metal hydroxide, metal carbonate, metal phosphate, and metal silicate, such as $Mg(OH)_2$, $BaCO_3$, and $Ca_3(PO_4)_2$.

Suitable examples of the organic solid substance include low-molecular weight compounds such as durene, anthracene, naphthalene, diphenyl, and other aromatic hydrocarbons, and also high-molecular weight compounds such as polyethylene, polypropylene, polyvinyltoluene, polystyrene, polymethyl methacrylate, polyamide, polyester, and polyvinyl chloride.

(2) Chlorosilane

Any chlorosilane having a hydrogen-silicon bond can be used in this invention. The chlorosilanes are preferably of the formula $H_mR_nSiX_r$ where R is a hydrocarbon group, R'O(R'=hydrocarbon group), $R^2R^3N$— ($R^2$ and $R^3$=hydrocarbon groups), or $R^4COO$— ($R^4$=hydrogen atom or hydrocarbon group); X is chlorine; m is 1 to 3; $0<r<4$, and $m+n+r=4$. The groups represented by R may be the same or different when n is greater than 1.

The hydrocarbon groups in the chlorosilane represented by R, R', $R^2$, $R^3$, and $R^4$ include, for example, alkyl, alkenyl, cycloalkyl, aryl, and aralkyl of carbon number 1 to 16. The alkyl group includes methyl, ethyl, propyl, n-butyl, isobutyl, n-hexyl, n-octyl, 2-ethylhexyl, and n-decyl. The alkenyl group includes vinyl, allyl, isopropenyl, propenyl, and butenyl. The cycloalkyl group includes cyclopentyl and cyclohexyl. The aryl group includes phenyl, tolyl, and xylyl. The aralkyl group includes benzyl, phenetyl, and phenylpropyl.

Preferable among them are lower alkyl groups such as methyl, ethyl, propyl, isopropyl, n-butyl, isobutyl, and t-butyl, and aryl groups such as phenyl and tolyl.

Preferred chlorosilanes are those in which R is a hydrocarbon, n is 0 to 2, and r is 1 to 3, as exemplified by $HSiCl_3$, $H_2SiCl_2$, $H_3SiCl$, $HCH_3SiCl_2$, $HC_2H_5SiCl_2$, $H(t{-}C_4H_9)SiCl_2$, $HC_6H_5SiCl_2$, $H(CH_3)_2SiCl$, $H(i{-}C_3H_7)_2SiCl$, $H_2C_2H_5SiCl$, $H_2(n{-}C_4H_9)SiCl$, $H_2(C_6H_4CH_3)SiCl$, and $HSiCl(C_6H_5)_2$. Most suitable among them are $HSiCl_3$, $HCH_3SiCl_2$, and $H(CH_3)_2SiCl$ and especially $HSiCl_3$.

(3) Electron donor compound

Electron donor compounds for use in this invention include carboxylic acids, carboxylic acid anhydrides, carboxylate esters, carboxylic acid halides, alcohols, ethers, ketones, amines, amides, nitriles, aldehydes, alcoholates, phosphoamides, thioethers, thioesters, carbonate esters, and compounds of phosphorus, arsenic, or antimony attached to an organic group through a carbon or oxygen atom. Preferable among them are carboxylic acids, carboxylic acid anhydrides, carboxylate esters, halogenated carboxylic acids, alcohols, and ethers.

Examples of the carboxylic acids include aliphatic monocarboxylic acids such as formic acid, acetic acid, propionic acid, butyric acid, isobutyric acid, valeric acid, caproic acid, pivalic acid, acrylic acid, methacrylic acid, and crotonic acid; aliphatic dicarboxylic acids such as malonic acid, succinic acid, glutaric acid, adipic acid, sebacic acid, maleic acid, and fumaric acid; aliphatic oxycarboxylic acids such as tartaric acid; alicyclic carboxylic acids such as cyclohexane monocarboxylic acid, cyclohexene monocarboxylic acid, cis-1,2-cyclohexane dicarboxylic acid, and cis-4-methylcyclohexene-1,2-dicarboxylic acid; aromatic monocarboxylic acids such as benzoic acid, toluic acid, anisic acid, p-t-butylbenzoic acid, naphthoic acid, and cinnamic acid; and aromatic dicarboxylic acids such as phthalic acid, isophthalic acid, terephthalic acid, and naphthalic acid.

The carboxylic acid anhydrides are the acid anhydrides of the above-mentioned carboxylic acids.

The preferred carboxylate esters are mono- or diesters of the above-mentioned carboxylic acids. Examples of the carboxylate esters include butyl formate, ethyl acetate, butyl acetate, isobutyl isobutyrate, propyl pivalate, isobutyl pivalate, ethyl acrylate, methyl methacrylate, ethyl methacrylate, isobutyl methacrylate, diethyl malonate, diisobutyl malonate, diethyl succinate, dibutyl succinate, diisobutyl

succinate, diethyl glutarate, dibutyl glutarate, diisobutyl glutarate, diisobutyl adipate, dibutyl sebacate, diethyl maleate, dibutyl maleate, diisobutyl maleate, monomethyl fumarate, diethyl fumarate, diisobutyl fumarate, diethyl tartrate, dibutyl tartrate, diisobutyl tartrate, ethyl cyclohexanecarboxylaten, methyl benzoate, ethyl benzoate, methyl p-toluate, ethyl p-t-butyl benzoate, ethyl p-anisate, ethyl alpha-naphthoate, isobutyl alpha-naphthoate, ethyl cinnamate, monomethyl phthalate, dibutyl phthalate, diisobutyl phthalate, dihexyl phthalate, dioctyl phthalate, di-2-ethylhexyl phthalate, diallyl phthalate, diphenyl phthalate, diethyl isophthalate, isobutyl isophthalate, diethyl terephthalate, dibutyl terephthalate, diethyl naphthalate, and dibutyl naphthalate.

The preferred carboxylic acid halides are acid halides of the above-mentioned carboxylic acids. Their examples include acetic acid chloride, acetic acid bromide, acetic acid iodide, propionic acid chloride, butyric acid chloride, butyric acid bromide, butyric acid iodide, pivalic acid chloride, pivalic acid bromide, acrylic acid chloride, acrylic acid bromide, acrylic acid iodide, methacrylic acid chloride, methacrylic acid bromide, methacrylic acid iodide, crotonic acid chloride, malonic acid chloride, malonic acid bromide, succinic acid chloride, succinic acid bromide, glutaric acid chloride, glutaric acid bromide, adipic acid chloride, adipic acid bromide, sebacic acid chloride, sebacic acid bromide, maleic acid chloride, maleic acid bromide, fumaric acid chloride, fumaric acid bromide, tartaric acid chloride, tartaric acid bromide, cyclohexanecarboxylic acid chloride, cyclohexanecarboxylic acid bromide, 1-cyclohexanecarboxylic acid chloride, cis-4-methylcyclohexene carboxylic acid chloride, cis-4-methylcyclohexenecarboxylic acid bromide, benzoyl chloride, benzoyl bromide, p-toluic acid chloride, p-toluic acid bromide, p-anisic acid chloride, p-anisic acid bromide, alpha-naphthoic acid chloride, cinnamic acid chloride, cinnamic acid bromide, phthalic acid dichloride, phthalic acid dibromide, isophthalic acid dichloride, isophthalic acid dibromide, terephthalic acid dichloride, and naphthalic acid dichloride. Additional examples include dicarboxylic acid monoalkylhalides such as adipic acid monomethylchloride, maleic acid monoethylchloride, and maleic acid monomethylchloride.

The alcohols are preferably represented by the formula ROH, where R is an alkyl, alkenyl, cycloalkyl, aryl or aralkyl group of carbon number 1 to 12. Examples of the alcohols include methanol, ethanol, propanol, isopropanol, butanol, isobutanol, pentanol, hexanol, octanol, 2-ethylhexanol, cyclohexanol, benzyl alcohol, allyl alcohol, phenol, cresol, xylenol, ethylphenol, isopropylphenol, p-t-butylphenol, and n-octylphenol.

The ethers are preferably represented by the formula ROR' and R' are alkyl, alkenyl, cycloalkyl, aryl, or aralkyl groups of carbon number 1 to 12, and R and R' may be the same or different. Their examples include diethyl ether, diisopropyl ether, dibutyl ether, diisobutyl ether, diisoamyl ether, di-2-ethylhexyl ether, diallyl ether, ethylallyl ether, butylallyl ether, diphenyl ether, anisole, and ethylphenyl ether.

(4) Titanium compound

The titanium compound used in this invention may be a compound of divalent, trivalent or tetravalent titanium. Examples of these compounds include:

titanium tetrachloride, titanium tetrabromide, trichloroethoxytitanium, trichlorobutoxytitanium, dichlorodiethoxytitanium, dichlorodibutoxytitanium, dichlorodiphenoxytitanium, chlorotriethoxytitanium, chlorotributoxytitanium, tetrabutoxytitanium, and titanium trichloride.

Preferable among them are tetravalent titanium halides such as titanium tetrachloride, trichloroethoxytitanium, dichlorodibutoxytitanium, and dichlorodiphenoxytitanium. Particularly preferable is titanium tetrachloride.

Preparation of catalyst component

The catalyst component used in this invention is obtained by contacting a magnesium dihydrocarbyloxide (component 1), a chlorosilane having a hydrogen-silicon bond (component 2), an electron donor compound (component 3), and a titanium compound (component 4) with one another. The contacting of the four components can be accomplished by (1) contacting component 1 and component 2 with each other, contacting the resulting contact product with component 3, and finally contacting the resulting contact product with component 4, (2) contacting components 1, 2, and 3 with one another simultaneously and then contacting the resulting contact product with component 4, or (3) contacting the four components with one another simultaneously. Methods (1) and (2) are preferable and method (1) is especially preferred. Methods (1) and (2) are described below.

Method (1)

1. Reaction of magnesium dihydrocarbyloxide with chlorosilane

The reaction of a magnesium dihydrocarbyloxide (component 1) with a chlorosilane (component 2) is accomplished by contacting them with each other. The reaction should preferably be accomplished by mixing and stirring them in the presence of a hydrocarbon.

The preferred hydrocarbon is a saturated aliphatic, saturated alicyclic, and aromatic hydrocarabon of carbon number 6 to 12 such as hexane, heptane, octane, cyclohexane, benzene, toluene, and xylene.

One mol of component 1 is preferably contacted with 0.5 to 10 mol, more preferably 1 to 5 mol, of

component 2. The contacting may be carried out at 0 to 200°C for 0.5 to 100 hours. Either component 1 and component 2 may contain more than one kind of compound.

The hydrocarbon may be used in any amount; but preferably, an amount less than 100 ml should be used for 1 g of component 1.

A gas will evolve upon contact of component 2 with component 1, indicating that the reaction is proceeding. The composition of the gas and the analysis of the reaction product suggest that the reaction forms a compound in which the silicon atom is bonded in some way. The quantity of silicon atom contained in the reaction product is more than 8 wt% in terms of the matter insoluble in an inert solvent, particularly n-hexane or n-heptane, at 65°C.

The contact product of component 1 and component 2 is separated from the reaction system and used for the subsequent contacting. It may be washed with an inert hydrocarbon like the one used in the contacting of component 1 and component 2. The washing may be carried out with heating.

2. Contacting with electron donor compound

The reaction product obtained in the above step 1. is then contacted with an electron donor compound (component 3). The contacting is accomplished by mixing and stirring them together or by mechanically copulverizing them in the presence or absence of an inert hydrocarbon. The preferred hydrocarbons are hexane, heptane, octane, cyclohexane, benzene, toluene, and xylene.

The contacting by mechanical copulverizing may be carried out at 0 to 100°C for 0.1 to 100 hours. The contacting by mere stirring may be carried out at 0 to 150°C for 0.5 to 10 hours.

Component 3 should preferably be used in an amount of 0.005 to 10 gram mol, preferably 0.01 to 1 gram mol, for 1 gram atom of magnesium in the contact product of magnesium dihydrocarbyloxide and chlorosilane.

3. Contacting with titanium compound

The contact product obtained in the above step 2 (designated as contact product 1) is subsequently contacted with a titanium compound (component 4). The contact product 1 may be washed with a proper cleaning agent such as the above-mentioned inert hydrocarbon before it is contacted with component 4.

The contacting of contact product 1 and component 4 may be achieved by simply bringing them into contact with each other; but it is preferable to mix and stir both of them in the presence of a hydrocarbon such as hexane, heptane, octane, cyclohexane, benzene, toluene, and xylene.

Component 4 may be used in an amount of 0.1 gram mol or above, preferably 1 to 50 gram mol, for 1 gram atom of magnesium in the contact product 1.

The contacting in the presence of a hydrocarbon may be carried out at 0 to 200°C for 0.5 to 20 hours, preferably at 60 to 150°C for 1 to 5 hours.

The contacting with component 4 should preferably be performed more than once. The second contact may be performed in the same way as mentioned above; but in the case where the first contact is performed in the presence of a hydrocarbon, the second contact should preferably be performed after the separation of the hydrocarbon.

(Method 2)

1. Contacting of magnesium dihydrocarbyloxide, chlorosilane, and electron donor compound

A magnesium dihydrocarbyloxide (component 1), a chlorosilane (component 2), and an electron donor compound (component 3) may be contacted with one another simultaneously. This contacting should preferably be performed by mixing and stirring in the presence of an inert hydrocarbon such as hexane, heptane, octane, cyclohexane, benzene, toluene, and xylene. Contacting by mechanical copulverizing may also be employed.

The contacting of components 1, 2, and 3 may be performed in the ratio of 1 mol of component 1, 0.5 to 10 mol, preferably 1 to 5 mol, of component 2, and 0.005 to 10 mol, preferably 0.05 to 1 mol, of component 3. The contacting of the three components may be performed at 0 to 200°C for 0.1 to 100 hours. Each component may contain more than one kind of compound.

The hydrocarbon may be used in any amount; but it is usually 100 ml or less for 1 g of component 1. The contact product of the three components is used for the subsequent contacting after separation, or without separation, from the reaction system. Prior to the subsequent contacting, the contact product may be washed, as required, with such an inert hydrocarbon as used in the contacting of the three components. Washing may be performed with heating.

2. Contacting with titanium compound

The contact product obtained in the above step 1 is then contacted with a titanium compound (component 4). This contacting is accomplished in the same way as mentioned in step 3 of method (1).

The solid product obtained in the above method (1) or (2) is washed, as required, with an inert hydrocarbon such as hexane, heptane, octane, cyclohexane, benzene, toluene, and xylene, followed by drying. Thus there is obtained the catalyst component used in this invention.

Catalyst for polymerization of olefin

The catalyst component obtained as mentioned above is made into the polymerization catalyst used in

this invention by combining it with an organic compound of Group I—III metals and a Lewis base having the steric hindrance.

Organic compound of group I—III metals

According to this invention, an organic compound of lithium, magnesium, calcium, zinc, or aluminum may be used. The preferred one is an organoaluminum compound represented by the formula $R_nAlX_{3-n}$, where R is an alkyl or aryl group; X is a halogen atom, alkoxyl group, or hydrogen atom; and n is any number in the range of $1 \leq n \leq 3$. Preferred ones are alkyl aluminum compound and a mixture thereof or complex thereof having 1 to 18 carbon atoms, preferably 2 to 6 carbon atoms, such as trialkyl aluminum, dialkyl aluminum monohalide, monoalkyl aluminum dihalide, alkyl aluminum sesquihalide, dialkyl aluminum monoalkoxide, and dialkyl aluminum monohydride. Examples of such compounds include trialkyl aluminum such as trimethyl aluminum, triethyl aluminum, tripropyl aluminum, triisobutyl aluminum, and trihexyl aluminum; dialkyl aluminum monohalide such as dimethyl aluminum chloride, diethyl aluminum chloride, diethyl aluminum bromide, diethyl aluminum iodide, and diisobutyl aluminum chloride; monoalkyl aluminum dihalide such as methyl aluminum dichloride, ethyl aluminum dichloride, methyl aluminum dibromide, ethyl aluminum dibromide, ethyl aluminum diiodide, and isobutyl aluminum dichloride; alkyl aluminum sesquihalide such as ethyl aluminum sesquichloride; dialkyl aluminum monoalkoxide such as dimethyl aluminum methoxide, diethyl aluminum ethoxide, diethyl aluminum phenoxide, dipropyl aluminum ethoxide, diisobutyl aluminum ethoxide, and diisobutyl aluminum phenoxide; and dialkyl aluminum hydride such as dimethyl aluminum hydride, diethyl aluminum hydride, dipropyl aluminum hydride, and diisobutyl aluminum hydride.

Preferable among them are trialkyl aluminums, and most suitable among them are triethyl aluminum and triisobutyl aluminum. These trialkyl aluminums may be used in combination with other organoaluminum compounds such as commercially available diethyl aluminum chloride, ethyl aluminum dichloride, ethyl aluminum sesquichloride, diethyl aluminum ethoxide, or diethyl aluminum hydride, or a mixture or a complex thereof.

According to this invention, it is also possible to use an organoaluminum compound in which two or more aluminum atoms are bonded through an oxygen atom or a nitrogen atom. Examples of such compounds include those which are represented by the formulas

$$(C_2H_5)_2AlOAl(C_2H_5)_2,\ (C_4H_9)_2AlOAl(C_4H_9)_2,\ \text{and}\ (C_2H_5)_2AlNC_2H_5Al(C_2H_5)_2.$$

Organic compounds of other metals than aluminum include, for example, diethyl magnesium, ethyl magnesium chloride, diethyl zinc, $LiAl(C_2H_5)_4$, and $LiAl(C_7H_{15})_4$.

The organometallic compound is used in an amount of 1 to 2000 gram mol, preferably 10 to 700 gram mol, for 1 gram atom of titanium in the catalyst component.

Lewis base having the steric hindrance

The Lewis base having the steric hindrance (simply referred to as Lewis base hereinafter) which is used as one component of the polymerization catalyst is preferably a compound having a nitrogen atom or oxygen atom in the molecule. It does not include the electron donor compound used for the preparation of the catalyst component used in this invention.

Examples of the Lewis base include piperidine compounds such as 2,2,6,6 - tetramethylpiperidine, 2,6 - diisopropylpiperidine, 2,6 - diisobutylpiperidine, 2,6 - diisobutyl - 4 - methylpiperidine, 2,2,6 - trimethylpiperidine, 2,2,6,6 - tetraethylpiperidine, 1,2,2,6,6 - pentamethylpiperidine, 2,2,6,6 - tetramethyl - 4 - piperidyl benzoate, and bis(2,2,6,6 - tetramethyl - 4 - piperidyl) sebacate; pyridine compounds such as 2,6 - diisopropylpyridine, 2,6 - diisobutylpyridine, and 2 - isopropyl - 6 - methylpyridine; pyrrolidine compounds such as 2,2,5,5 - tetramethylpyrrolidine, 2,5 - diisopropylpyrrolidine, 2,2,5 - trimethylpyrrolidine, 1,2,2,5,5 - pentamethylpyrrolidine, and 2,5 - diisobutylpyrrolidine; amine compounds such as diisopropylethylamine, t-butyldimethylamine, diphenylamine, and di - o - triethylamine; aniline compounds such as N,N - diethylaniline, and N,N - diisopropylaniline; ketone compounds such as o - tolyl - t - butylketone, methyl - 2,6 - di - t - butylphenylketone, and di - o - tolylketone; furan compounds such as 2,2,5,5 - tetraethyltetrahydrofuran, and 2,2,5,5 - tetramethyltetrahydrofuran; and pyran compounds such as 2,2,6,6 - tetraethyltetrahydropyran and 2,2,6,6 - tetramethyltetrahydropyran.

The Lewis base is preferably used in an amount of 0.02 to 2.0 gram mol, more preferably 0.05 to 0.8 gram mol, for 1 gram atom of metal in the organometallic compound. One or more kinds of Lewis base may be used.

In addition, it may be combined with (D) a non-sterically hindered electron donor compound. The combination with an electron donor compound results in a polymer having improved stereoregularity. The electron donor compound is preferably a compound such as that used in the preparation of the catalyst component in this invention, most preferably an ester of carboxylic acid, alcohol, ether or ketone. Examples include ethyl-p-anisate and methyl-p-toluate.

It is also possible to use an electron donor compound of an organosilicon compound represented by the formula $R_pSiX_q(OR')_s$, where R and R' are the same or different hydrocarbon groups, X is a halogen

atom, 0≤p<4, 0≤q<4, 0<s≤4, and p+q+s=4. The hydrocarbon groups include alkyl, alkenyl, cycloalkyl, aryl, and aralkyl groups. If p is 2 or above, R may denote hydrocarbon groups of different kind. The halogen atom represented by X should preferably be a chlorine atom.

Examples of the organosilicon compound include:

tetramethoxysilane, tetraethoxysilane, tetrabutoxysilane, tetraisobutoxysilane, tetraphenoxysilane, tetra(p-methylphenoxy)silane, tetrabenzyloxysilane, methyltrimethoxysilane, methyltriethoxysilane, methyltributoxysilane, methyltriphenoxysilane, ethyltriethoxysilane, ethyltriisobutoxysilane, ethyltriphenoxysilane, butyltrimethoxysilane, butyltriethoxysilane, butyltributoxysilane, butyltriphenoxysilane, isobutyltriisobutoxysilane, vinyltriethoxysilane, allyltrimethoxysilane, phenyltrimethoxysilane, phenyltriethoxysilane, benzyltriphenoxysilane, methyltriallyloxysilane, dimethyldimethoxysilane, dimethyldiethoxysilane, dimethyldiisopropoxysilane, dimethyldibutoxysilane, dimethyldihexyloxysilane, dimethyldiphenoxysilane, diethyldiethoxysilane, diethyldiisobutoxysilane, diethyldiphenoxysilane, dibutyldiisopropoxysilane, dibutyldibutoxysilane, dibutyldiphenoxysilane, diisobutyldiethoxysilane, diisobutyldiisobutoxysilane, diphenyldimethoxysilane, diphenyldiethoxysilane, diphenyldibutoxysilane, dibenzyldiethoxysilane, divinyldiphenoxysilane, diallyldipropoxysilane, diphenyldiallyloxysilane, methylphenyldimethoxysilane, and chlorophenyldiethoxysilane.

Preferable among them are ethyltriethoxysilane, vinyltriethoxysilane, phenyltrimethoxysilane, phenyltriethoxysilane, diphenyldimethoxysilane, methylphenyldimethoxysilane, and chlorophenyldiethoxysilane.

The silicon compound is used in an amount of 0.005 to 1.0 gram mol, preferably 0.01 to 0.5 gram mol, for 1 gram atom of metal in the organometallic compound.

The Lewis base and the electron donor compound to be used as required may be combined with the organometallic compound and the catalyst component simultaneously, or they may be used after the preliminary contacting with the organometallic compound.

Polymerization of olefins

The polymerization catalyst as mentioned above is used for homopolymerization of monoolefins or copolymerization of a monoolefin with other monoolefin or diolefin. It is particularly suitable for homopolymerization of alpha-olefins, particularly alpha-olefin of carbon number 3 to 6 such as propylene, 1-butene, 4-methyl-1-pentene, and 1-hexene. It is also suitable for random or block copolymerization of alpha-olefins or an alpha-olefin and ethylene. In addition, it is useful for homopolymerization of ethylene of ethylene and for random or block copolymerization of ethylene and an alpha-olefin of carbon number 3 to 10 as exemplified above.

The polymerization may be performed either in gas phase or liquid phase. The liquid phase polymerization may be accomplished in an inert hydrocarbon such as n-butane, isobutane, n-pentane, isopentane, hexane, heptane, octane, cyclohexane, benzene, toluene, and xylene, or in the liquid monomer. The polymerization temperature is usually −80°C to +150°C, preferably 40 to 120°C. The polymerization pressure is 1 to 60 atm. (0.1 to 6.2 MPa). The molecular weight modification of the resulting polymer is accomplished in the presence of hydrogen or other known molecular weight modifier. In the copolymerization of olefins, the quantity of other olefin to be copolymerized is usually less than 30 wt%, particularly 0.3 to 15 wt%, based on the olefin. The polymerization with the catalyst system of this invention may be performed continuously or batchwise under the commonly used conditions. The copolymerization may be performed in one stage or in two stages.

Effect of invention

The process of this invention that employs the polymerization catalyst constructed as mentioned above provides in high yields olefin polymers having high stereoregularity over a broad range of melt flow rate. Thus it provides olefin polymers having high stereoregularity and a low level of ash content even when the deashing step is omitted. Moreover, the copolymerization performed according to the process of this invention provides quality copolymers efficiently, with a very small amount of waxlike polymer formed.

Examples

Aspects of the invention are described hereinafter in more detail, but the scope of this invention is not limited by these Examples Percent (%) in the examples means wt%, unless otherwise indicated.

The polymerization activity Ec is the quantity (kg) of polymer formed per gram of the catalyst

component, and the polymerization activity Et is the quantity (kg) of polymer formed per gram of titanium in the catalyst component.

The heptane insolubles (abbreviated as H.I.) that indicates the ratio of crystalline fraction in the polymer is the quantity of polymer that remains undissolved when extracted with boiling n-heptane for 6 hours by using a Soxhlet extractor of improved type. The melt flow rate (MFR) was measured according to ASTM D-1238, and the bulk density was measured according to ASTM D-1895-69, Method A.

Example 1

Preparation of catalyst component

Into a 500-ml glass reactor equipped with a reflux condenser, dropping funnel, and stirrer, with the atmosphere replaced with nitrogen, were charged 35 g (0.31 mol) of commercial magnesium diethoxide and 100 ml of n-heptane. While stirring at room temperature, a mixture of 104 g (0.77 mol) of trichlorosilane and 30 ml of n-heptane was dropped from the dropping funnel over 45 minutes. Stirring was continued at 70°C for 6 hours. During this period, the reactants gave off a gas, which was found to be composed mainly of ethyl chloride and ethylene. The solid thus obtained was filtered off at 70°C and washed with five 300-ml portions of n-hexane at 65°C, followed by drying at 60°C for 30 minutes under reduced pressure. Thus there was obtained solid component (I).

Fifteen grams of solid component (I) was placed under the nitrogen gas atmosphere in a 300-ml stainless steel (SUS 316) mill pot containing 100 pieces of stainless steel (SUS 316) balls, 12 mm in diameter. Then, 3.8 g of diisobutyl phthalate was added to the mill pot. The mill pot was vibrated on a vibrator for 1 hour to carry out contacting. Thus there was obtained solid component (II).

10.1 g of the solid component (II) was placed under the nitrogen gas atmosphere in a 200-ml glass reactor equipped with a stirrer. Then, 40 ml of toluene and 60 ml of titanium tetrachloride were added to the reactor, followed by stirring at 90°C for 2 hours. After removal of the supernatant liquid by decantation, 40 ml of toluene and 60 ml of titanium tetrachloride were added, followed by stirring at 90°C for 2 hours. The resulting solid substance was filtered off at 90°C and washed with seven 100-ml portions of n-hexane at 65°C, followed by drying at 60°C for 30 minutes under reduced pressure. Thus there was obtained 7.0 g of catalyst component (A) containing 4.5 wt% of titanium.

Polymerization of propylene

Into a 3-liter autoclave, with the atmosphere replaced with nitrogen, was charged 12.5 mg of catalyst component (A), 2.4 mmol of triethyl aluminum (abbreviated at TEAL), and 0.8 mmol of 2,2,6,6-tetramethylpiperidine. Then 200 ml of hydrogen gas and 2 liters of liquefied propylene were added. The polymerization of propylene was carried out at 70°C for 1 hour.

When polymerization was complete, unreacted propylene was purged, and there was obtained 403 g of white polypropylene powder having an HI of 95.7%, an MFR of 0.85 g/10 min, and a bulk density of 0.4 g/cc. Ec was 32.2 kg and Et was 716 kg.

Examples 2 to 7

The polymerization of propylene was carried out in the same way as in Example 1, except that the polymerization conditions were changed or 2,2,6,6-tetramethylpiperidine was replaced by other Lewis bases as shown in Table 1. The results are shown in Table 1.

Examples 8 to 10

The catalyst components were prepared in the same way as in Example 1, except that diisobutyl phthalate used as the electron donor compound which was contacted with the solid component (I) was replaced by the compounds as shown in Table 2, whereby there were obtained catalyst components ($A_2$), ($A_3$), and ($A_4$). The polymerization of propylene was carried out in the same way as in Example 1 by using these catalyst components. The results are shown in Table 2.

Comparative Example 1

Preparation of catalyst component

Into a 300-ml stainless steel mill pot containing 100 pieces of stainless steel balls, 10 mm in diameter, were charged, under the nitrogen gas atmosphere, 28.7 g of anhydrous magnesium chloride and 7.7 g of a complex of titanium tetrachloride and ethyl benzoate. This mill pot was vibrated on a vibrator for 20 hours to effect pulverization. Thus there was obtained a solid component containing 2.2% of titanium. 15.2 g of this solid component was placed, under the nitrogen gas atmosphere, in a 300-ml glass reactor, and then 50 ml of n-heptane was added. The resulting solid substance was filtered off at 65°C and washed with four 60-ml portions of n-heptane, followed by drying. Thus there was obtained catalyst component ($A_5$) containing 1.4% of titanium.

Polymerization of propylene

The polymerization of propylene was performed in the same way as in Example 4, except that the catalyst component ($A_5$) was used. The results are shown in Table 3.

Comparative Example 2

Preparation of catalyst component

Into a 300-ml stainless steel (SUS 316) mill pot containing 100 pieces of stainless steel (SUS 316) balls, 12 mm in diameter, were charged, under the nitrogen gas atmosphere, 24.3 g of anhydrous magnesium chloride (containing less than 1% of water) and then 8.1 g of diisobutyl phthalate. This mill pot was vibrated on a vibrator for 20 hours. Thus there was obtained a solid component.

10.2 g of the solid component was placed, under the nitrogen gas atmosphere, in a 200-ml glass reactor equipped with a stirrer, and then 90 ml of titanium tetrachloride was added, followed by stirring at 80°C for 2 hours. The resulting solid substance was filtered off at 80°C and washed with seven 100-ml portions of n-hexane at 65°C, followed by drying at 60°C for 30 minutes under reduced pressure. Thus there was obtained catalyst component ($A_6$) containing 3.8% of titanium.

Polymerization of propylene

The polymerization of propylene was performed in the same way as in Example 4, except that the catalyst component ($A_6$) was used. The results are shown in Table 3.

Comparative Example 3

Preparation of catalyst component

Into a 300-ml glass reactor equipped with a reflux condenser, dropping funnel, and stirrer, with the atmosphere replaced with nitrogen, were charged 100 ml of 10% butylethyl magnesium solution in n-heptane. While stirring at room temperature, a mixture of 18.2 g of 2-ethylhexanol and 30 ml of n-heptane was dropped from the dropping funnel over 15 minutes. Stirring was continued at 80°C for 2 hours. After cooling to room temperature, 1.3 g of phthalic acid was added and treatment was carried out at 100°C for 1 hour. After cooling to room temperature, there was obtained uniform solution (a).

The uniform solution (a) was added dropwise to a 500-ml glass reactor equipped with a reflux condenser and a stirrer, with the atmosphere replaced with nitrogen, to which 200 ml of titanium tetrachloride had been added and which had been cooled to −20°C. The dropwise addition was performed over 1 hour with stirring at −20°C. The reaction system was heated to 100°C, and 3.9 ml of diisobutyl phthalate was added. Reaction was carried out at 105°C for 2 hours. The supernatant liquid was removed by decantation and 200 ml of titanium tetrachloride was added. Reaction was performed at 105°C for 2 hours. After the completion of reaction, the resulting solid substance was filtered off at 105°C and washed with seven 250-ml portions of n-hexane at 65°C, followed by drying at 60°C for 30 minutes under reduced pressure. Thus there was obtained catalyst component ($A_7$) containing 3.0% of titanium.

Polymerization of propylene

The polymerization of propylene was performed in the same way as in Example 4, except that the catalyst component ($A_7$) was used. The results are shown in Table 3.

Examples 11 to 17

The polymerization of propylene was carried out in the same way as in Example 1, except that 2,2,6,6-tetramethylpiperidine used as the Lewis base was used in combination with an electron donor compound as shown in Table 4. The results are shown in Table 4.

Example 18

Catalyst component ($A_8$) was prepared in the same way as in Example 1, except that isobutyl phthalate used as an electron donor compound was replaced by ethyl benzoate. The polymerization of propylene was carried out by using the catalyst component ($A_8$) under the conditions as shown in Table 4. The results are shown in Table 4.

Comparative Examples 4 and 5

The polymerization of propylene was carried out in the same way as in Example 13 or 18, except that 2,2,6,6-tetramethylpiperidine was not used as the Lewis base. The results are shown in Table 5.

Examples 19 and 20

The polymerization of propylene was carried out in the same way as in Example 13, except that 2,2,6,6-tetramethylpiperidine was replaced by the Lewis base as shown in Table 6. The results are shown in Table 6.

Example 21

The polymerization of propylene was carried out in the same way as in Example 12, except that the triethyl aluminum was replaced by triisobutyl aluminum. The following results were obtained.

| | |
|---|---|
| Ec: | 21.2 kg/g-cat. |
| Et: | 471 kg/g-Ti |
| H.I.: | 98.1% |
| MFR: | 0.9 g/10 min |

Example 22

The polymerization of propylene was carried out in the same way as in Example 12, except that 1.2 mmol each of triethylaluminum and diethylaluminum ethoxide was used as the organometallic compound. The following results were obtained.

| | |
|---|---|
| Ec: | 22.3 kg/g-cat. |
| Et: | 496 kg/g-Ti |
| H.I.: | 97.3% |
| MFR: | 19.5 g/10 min |

Examples 23 to 25

The polymerization of propylene was carried out in the same way as in Example 12, except that the catalyst component (A) was replaced by those which are shown in Table 7. The results are shown in Table 7.

Example 26

The polymerization of propylene was carried out in the same way as in Example 13, except that 3 g of ethylene was forced into the autoclave in six portions at intervals of 10 minutes. There was obtained 565 g of propylene-ethylene random copolymer. No fouling occurred in the autoclave, and no agglomeration was found in the polymer particles.

Ec was 45.2 kg/g-cat, Et was 1004 kg/g-Ti, and the bulk density of the copolymer was 0.37 g/cc. The ethylene content in the copolymer determined by IR spectroscopy was 3.0%. The melting point and crystallization point of the copolymer determined by a differential scanning calorimeter were 144°C and 99°C, respectively.

Example 27

Random copolymerization of propylene and 1-butene was carried out in the same way as in Example 13, except that 50 g of 1-butene was forced into the autoclave after the introduction of propylene into the autoclave. There was obtained 373 g of copolymer. No fouling occurred in the autoclave, and no agglomeration was found in the polymer particles.

Ec was 29.8 kg/g-cat, Et was 663 kg/g-Ti, and the bulk density of the copolymer was 0.38 g/cc. The content of 1-butene in the copolymer determined by IR spectroscopy was 6.4%. The melting point and crystallization point of the copolymer determined by a differential scanning calorimeter were 153.5°C and 109°C, respectively.

Example 28

Into a 3-liter autoclave, with the atmosphere replaced with nitrogen, was charged 6.7 mg of catalyst component (A), 1.3 mmol of triethyl aluminum, and 0.4 mmol of 2,2,6,6-tetramethylpiperidine. Then 1.5 liters of hydrogen gas and 2 liters of liquefied propylene were added. The homopolymerization of propylene was carried out at 70°C for 1 hour. Unreacted propylene was purged, and the atmosphere of the autoclave was replaced by nitrogen gas. Into this autoclave was introduced a mixture gas of ethylene and propylene (ethylene/propylene=1.5 molar ratio). Copolymerization was performed at 70°C for 3 hours while supplying the mixture gas at 1.5 atm. When the copolymerization was complete, the unreacted mixture gas was discharged from the reaction system. Thus there was obtained 383 g of propylene-ethylene block copolymer.

The copolymer portion in the copolymer as calculated from the consumption of the mixture gas and the quantity of the copolymer formed was 13.5%. The ethylene content in the copolymer determined by IR spectroscopy was 6.3%. This means that the ethylene content in the copolymer portion is 47%. Calculations from the quantity of the copolymer formed and the consumption of the mixture gas indicate that 1 g of the catalyst formed 49.5 kg of propylene homopolymer and 7.7 kg of the copolymer portion. The MFR of the copolymer was 8.4 g/10 min, and the bulk density was 0.39 g/cc. No fouling occurred in the autoclave, and no agglomeration was found in the polymer particles.

Examples 29 and 30

The catalyst components were prepared in the same way as in Example 1, except that trichlorosilane used for the contacting of magnesium diethoxide was replaced by methyldichlorosilane and dimethylchlorosilane, respectively. The polymerization of propylene was carried out in the same way as in Example 1 by using these catalyst components. The results are shown in Table 8.

Example 31

The catalyst component was prepared in the same way as in Example 1, except that diisobutyl phthalate used for the contacting of solid-component (I) was replaced by benzoic acid anhydride. The polymerization of propylene was carried out in the same way as in Example 1 by using this catalyst component. The results are shown in Table 8.

TABLE 1

| Example | Lewis base [C] | Hydrogen (ml) | TEAL/[C] (molar ratio) | Ec (kg/g-cat) | Et (kg/g-Ti) | HI (%) | MFR (g/10 min) |
|---|---|---|---|---|---|---|---|
| 1 | 2,2,6,6-tetramethyl-piperidine | 200 | 3 | 32.2 | 716 | 95.7 | 0.85 |
| 2 | 2,2,6,6-tetramethyl-piperidine | 200 | 1 | 30.5 | 678 | 96.2 | 0.4 |
| 3 | 2,2,6,6-tetramethyl-piperidine | 200 | 10 | 35.8 | 796 | 95.0 | 1.8 |
| 4 | 2,2,6,6-tetramethyl-piperidine | 1500 | 3 | 52.0 | 1156 | 95.3 | 13.1 |
| 5 | 2,2,6,6-tetramethyl-4-piperidyl benzoate | 200 | 3 | 19.6 | 436 | 95.0 | 0.9 |
| 6 | bis(2,2,6,6-tetra-methyl-4-piperidyl) sebacate | 200 | 3 | 20.3 | 451 | 95.1 | 1.2 |
| 7 | diphenylamine | 1500 | 3 | 14.3 | 318 | 95.1 | 13.7 |

TABLE 2

| Example | Electron donor compound | Catalyst component | Ec (kg/g-cat) | Et (kg/g-Ti) | HI (%) | MFR (g/10 min) |
|---|---|---|---|---|---|---|
| 8 | Benzoyl chloride | ($A_2$) | 19.8 | 521 | 95.7 | 0.8 |
| 9 | Di-n-butyl tartrate | ($A_3$) | 18.8 | 588 | 95.5 | 1.2 |
| 10 | Phthalic anhydride | ($A_4$) | 20.6 | 412 | 95.5 | 1.5 |

TABLE 3

| Comparative Example | Catalyst component | Ec (kg/g-cat) | Et (kg/g-Ti) | HI (%) | MFR (g/10 min) |
|---|---|---|---|---|---|
| 1 | ($A_5$) | 9.7 | 693 | 90.5 | 6.6 |
| 2 | ($A_6$) | 13.1 | 345 | 91.1 | 12.2 |
| 3 | ($A_7$) | 12.6 | 420 | 94.6 | 21.5 |

TABLE 4

| Example | Lewis base [C] | Electron donor compound [D] | Hydrogen (ml) | TEAL/[C] (molar ratio) | TEAL/[D] (molar ratio) | Ec (kg/g-cat) | Et (kg/g-Ti) | HI (%) | MFR (g/10 min) |
|---|---|---|---|---|---|---|---|---|---|
| 11 | 2,2,6,6-tetramethyl-piperidine | Ethyl p-anisate | 200 | 3 | 4.5 | 28.5 | 633 | 97.6 | 0.5 |
| 12 | 2,2,6,6-tetramethyl-piperidine | Ethyl p-anisate | 200 | 3 | 3 | 23.4 | 520 | 98.7 | 0.8 |
| 13 | 2,2,6,6-tetramethyl-piperidine | Ethyl p-anisate | 1500 | 3 | 3 | 38.5 | 856 | 97.8 | 9.8 |
| 14 | 2,2,6,6-tetramethyl-piperidine | Ethyl p-anisate | 5000 | 3 | 3 | 42.0 | 933 | 96.1 | 30.5 |
| 15 | 2,2,6,6-tetramethyl-piperidine | Ethyl p-anisate | 200 | 10 | 10 | 32.4 | 720 | 96.1 | 3.1 |
| 16 | 2,2,6,6-tetramethyl-piperidine | Phenyltri-ethoxysilane | 200 | 10 | 15 | 20.7 | 460 | 96.7 | 3.0 |
| 17 | 2,2,6,6-tetramethyl-piperidine | Methyl p-toluate | 200 | 3 | 4.5 | 20.5 | 456 | 98.3 | 0.7 |
| 18 | 2,2,6,6-tetramethyl-piperidine | Methyl p-toluate | 1500 | 3 | 3 | 16.8 | 560 | 96.1 | 12.5 |

TABLE 5

| Comparative Example | Catalyst component | Ec (kg/g-cat) | Et (kg/g-Ti) | HI (%) | MFR (g/10 min) |
|---|---|---|---|---|---|
| 4 | (A) | 6.2 | 138 | 92.5 | 14.5 |
| 5 | ($A_8$) | 12.0 | 400 | 94.8 | 4.6 |

TABLE 6

| Example | Lewis base | Ec (kg/g-cat) | Et (kg/g-Ti) | HI (%) | MFR (g/10 min) |
|---|---|---|---|---|---|
| 19 | 2,2,5,5-tetra-methylhydrofuran | 15.8 | 351 | 95.1 | 12.8 |
| 20 | Diphenylamine | 13.9 | 309 | 96.2 | 11.0 |

TABLE 7

| Example | Catalyst component | Ec (kg/g-cat) | Et (kg/g-Ti) | HI (%) | MFR (g/10 min) |
|---|---|---|---|---|---|
| 23 | ($A_2$) | 16.4 | 432 | 96.5 | 0.6 |
| 24 | ($A_3$) | 17.2 | 538 | 96.7 | 1.3 |
| 25 | ($A_4$) | 18.3 | 366 | 98.1 | 1.2 |

TABLE 8

| Example | Ec (kg/g-cat) | Et (kg/g-Ti) | HI (%) | MFR (g/10 min) |
|---|---|---|---|---|
| 29 | 24.2 | 590 | 95.5 | 1.2 |
| 30 | 23.8 | 626 | 95.6 | 1.3 |
| 31 | 18.4 | 526 | 95.1 | 0.7 |

## Claims

1. A catalyst comprising:
(A) a titanium containing catalyst component obtained by contacting:
 1. a magnesium dihydrocarbyloxide of the formula Mg(OR)(OR′), where R and R′ are alkyl, alkenyl, cycloalkyl, aryl or aralkyl groups having 1 to 20 carbon atoms,
 2. a silicon compound having a hydrogen-silicon bond,
 3. an electron donor, and
 4. a titanium compound,
(B) an organic compound of a metal in Groups I to III of the Periodic Table, and
(C) a sterically hindered-Lewis base characterised in that the silicon compound is a chlorosilane.

2. The catalyst of claim 1 wherein the chlorosilane is selected from $HSiCl_3$, $H_2SiCl_2$, $H_3SiCl$, $HCH_3SiCl_2$, $HC_2H_5SiCl_2$, $H(t\text{-}C_4H_9)SiCl_2$, $HC_6H_5SiCl_2$, $H(CH_3)_2SiCl$, $H(i\text{-}C_3H_7)_2SiCl$, $H_2C_2H_5SiCl_2$, $H_2(n\text{-}C_4H_9)SiCl$, $H_2(C_6H_4CH_3)SiCl$ and $HSiCl(C_6H_5)_2$.

3. The catalyst of claim 1 or claim 2, wherein the magnesium dihydrocarbyloxide and the chlorosilane are contacted to form a reaction product therefrom prior to contact with the electron donor compound and the titanium compound.

4. The catalyst of any of claims 1 to 3, wherein the titanium compound is $TiCl_4$.

5. The catalyst of any of claims 1 to 4, wherein the sterically hindered Lewis base is a compound having a nitrogen atom or oxygen atom.

6. The catalyst of claim 5, wherein the sterically hindered Lewis base is a sterically hindered piperidine, puridine, pyrrolidine, amine, aniline, ketone, furan or pyran.

7. The catalyst of claim 6 wherein the sterically hindered Lewis base is 2,2,6,6-tetramethylpiperidine, 2,2,6,6-tetramethyl-4-piperidyl benzoate, bis(2,2,6,6-tetramethyl-4-piperidyl) sebacate, diphenylamine, or 2,2,5,5-tetramethylhydrofuran.

8. The catalyst of claim 1 further comprising (D) a non-sterically hindered electron donor compound.

9. The catalyst of claim 8 wherein the electron donor (C) is ethyl-p-anisate, phenyl triethoxysilane or methyl p-toluate.

10. A catalyst system comprising:

(A) a titanium containing catalyst component obtained by

1. contacting magnesium diethoxide with $HSiCl_3$,
2. contacting the solid obtained from the contacting of magnesium diethoxide and $HSiCl_3$ with an electron donor compound, and
3. contacting the product therefrom with $TiCl_4$,

(B) an aluminum alkyl represented by the formula $R_nAlX_{3-n}$ wherein R is a $C_{1-18}$ alkyl group or a $C_{1-12}$ aryl group, X is a halogen atom and $1 \leq n \leq 3$,

(C) a sterically hindered Lewis base which can be one of piperidines, pyridines, pyrrolidines, amines, anilines, ketones, furans and pyrans.

11. A process for the polymerization of olefins comprising polymerizing the olefins in the presence of the catalyst systems of any of claims 1, 2, 3, 4, 5, 6, 7, 8, 9 and 10.

**Patentansprüche**

1. Katalysator, enthaltend:

(A) eine titanhaltige Katalysatorkomponente, erhalten durch Inkontaktbringen von:

1. einem Magnesiumdihydrocarbyloxid der Formel Mg(OR)(OR′), in der R und R′ Alkyl-, Alkenyl-, Cycloalkyl-, Aryl- oder Aralkylgruppen mit 1 bis 20 Kohlenstoffatomen bedeuten,
2. einer Siliciumverbindung mit einer Wasserstoff-Siliciumbindung,
3. einem Elektronendonor und
4. einer Titanverbindung,

(B) eine organische Verbindung eines Metalls der Gruppen I bis III des Periodischen Systems und

(C) eine sterisch gehinderten Lewis Base, dadurch gekennzeichnet, daß die Siliciumverbindung ein Chlorsilan ist.

2. Katalysator nach Anspruch 1, in dem das Chlorsilan aus $HSiCl_3$, $H_2SiCl_2$, $H_3SiCl$, $HCH_3SiCl_2$, $HC_2H_5SiCl_2$, $H(t\text{-}C_4H_9)SiCl_2$, $HC_6H_5SiCl_2$, $H(CH_3)_2SiCl$, $H(i\text{-}C_3H_7)_2SiCl$, $H_2C_2H_5SiCl_2$, $H_2(n\text{-}C_4H_9)SiCl$, $H_2(C_6H_4CH_3)SiCl$ und $HSiCl(C_6H_5)_2$ ausgewählt ist.

3. Katalysator nach Anspruch 1 oder 2, in dem das Magnesiumdihydrocarbyloxid und das Chlorsilan zur Bildung eines Reaktionsproduktes vor Inkontaktbringen mit der Elektronendonorverbindung und der Titanverbindung in Kontakt gebracht werden.

4. Katalysator nach einem der Ansprüche 1 bis 3, in dem die Titanverbindung $TiCl_4$ ist.

5. Katalysator nach einem der Ansprüche 1 bis 4, in dem die sterisch gehinderte Lewis Base eine Verbindung mit einem Stickstoffatom oder Sauerstoffatom ist.

6. Katalysator nach Anspruch 5, in dem die sterisch gehinderte Lewis Base ein sterisch gehindertes Piperidin, Puridin, Pyrrolidin, Amin, Anilin, Keton, Furan oder Pyran ist.

7. Katalysator nach Anspruch 6, in dem die sterisch gehinderte Lewis Base 2,2,6,6 - Tetramethylpiperidin, 2,2,6,6 - Tetramethyl - 4 - piperidylbenzoat, Bis(2,2,6,6 - Tetramethyl - 4 - piperidyl) - sebacat, Diphenylamin oder 2,2,5,5 - Tetramethylhydrofuran ist.

8. Katalysator nach Anspruch 1, weiter enthaltend (D) eine sterisch nicht gehinderte Elektronendonorverbindung.

9. Katalysator nach Anspruch 8, in dem der Elektronendonor (C) Ethyl-p-anisat, Phenyltriethoxysilan oder Methyl-p-toluat ist.

10. Katalysatorsystem, enthaltend:

(A) eine titanhaltige Katalysatorkomponente, erhalten durch:

1. Inkontaktbringen von Magnesiumdiethoxid mit $HSiCl_3$,
2. Inkontaktbringen des Feststoffes, erhalten aus dem Inkontaktbringen von Magnesiumdiethoxid und $HSiCl_3$, mit einer Elektronendonorverbindung und
3. Inkontaktbringen des daraus erhaltenen Produktes mit $TiCl_4$,

(B) ein Aluminiumalkyl entsprechend der Formel $R_nAlX_{3-n}$, in der R eine $C_{1-18}$ Alkylgruppe oder eine $C_{1-12}$ Arylgruppe ist, X ein Halogenatom ist und $1 \leq n \leq 3$,

(C) eine sterisch gehinderte Lewis Base, die ein Piperidin, Pyridin, Pyrrolidin, Amin, Anilin, Keton, Furan oder Pyran sein kann.

11. Verfahren zu Polymerisation von Olefinen, bei dem man die Olefine in Gegenwart eines Katalysatorsystems nach einem der Ansprüche 1, 2, 3, 4, 5, 6, 7, 8, 9 und 10 polymerisiert.

**Revendications**

1. Catalyseur comprenant:

(A) un composant de catalyseur contenant du titane, obtenu par mise en contact

1. d'un dihydrocarbylate de magnésium de formule Mg(OR)(OR'), dans laquelle R et R' sont des groupes alkyle, alcényle, cycloalkyle, aryle ou aralkyle ayant 1 à 20 atomes de carbone,
2. d'un composé de silicium ayant une liaison hydrogène-silicium,
3. d'un donneur d'électrons et
4. d'un composé de titane,

(B) un composé organique d'un métal des Groupes I à III du Tableau Périodique et

(C) une base de Lewis à encombrement stérique, caractérisé en ce que le composé de silicium est le chlorosilane.

2. Catalyseur suivant la revendication 1, dans lequel le chlorosilane est choisi entre $HSiCl_3$, $H_2SiCl_2$, $H_3SiCl$, $HCH_3SiCl_2$, $HC_2H_5SiCl_2$, $H(t\text{-}C_4H_9)SiCl_2$, $HC_6H_5SiCl_2$, $H(CH_3)_2SiCl$, $H(i\text{-}C_3H_7)_2SiCl$, $H_2C_2H_5SiCl_2$, $H_2(n\text{-}C_4H_9)SiCl$, $H_2(C_6H_4CH_3)SiCl$ et $HSiCl(C_6H_5)_2$.

3. Catalyseur suivant la revendication 1 ou la revendication 2, dans lequel le dihydrocarbylate de magnésium et le chlorosilane sont mis en contact pour former un produit résultant de leur réaction avant la mise en contact avec le composé donneur d'électrons et le composé de titane.

4. Catalyseur suivant l'une quelconque des revendications 1 à 3, dans lequel le composé de titane est $TiCl_4$.

5. Catalyseur suivant l'une quelconque des revendications 1 à 4, dans lequel la base de Lewis à encombrement stérique est un composé ayant un atome d'azote ou un atome d'oxygène.

6. Catalyseur suivant la revendication 5, dans lequel la base de Lewis à encombrement stérique est une pipéridine, une pyridine, une pyrrolidine, une amine, une aniline, une cétone, un furanne ou un pyranne à encombrement stérique.

7. Catalyseur suivant la revendication 6, dans lequel la base de Lewis à encombrement stérique est la 2,2,6,6 - tétraméthylpipéridine, le benzoate de 2,2,6,6 - tétraméthyl - 4 - pipéridine, le sébacate de bis(2,2,6,6 - tétraméthyl - 4 - pipéridyle), la diphénylamine ou le 2,2,5,5 - tétraméthylhydrofuranne.

8. Catalyseur suivant la revendication 1, comprenant en outre (D) un composé donneur d'électrons sans encombrement stérique.

9. Catalyseur suivant la revendication 8, dans lequel le donneur d'électrons (C) est le p-anisate d'éthyle, le phényltriéthoxysilane ou le p-toluate de méthyle.

10. Composition de catalyseur, comprenant:

(A) un composant de catalyseur contenant du titane obtenu par

1. mise en contact de diéthylate de magnésium avec du $HSiCl_3$,
2. mise en contact de la matière solide obtenue par contact de diéthylate de magnésium et de $HSiCl_3$ avec un composé donneur d'électrons et
3. mise en contact du produit résultant avec du $TiCl_4$,

(B) un aluminium-alkyle représenté par la formule $R_nAlX_{3-n}$ dans laquelle R est un groupe alkyle en $C_1$ à $C_{18}$ ou un groupe aryle en $C_1$ à $C_{12}$, X est un atome d'halogène et n va d'une valeur supérieure ou égale à 1 à une valeur inférieure ou égale à 3,

(C) une base de Lewis à encombrement stérique qui peut être une base choisie entre des pipéridines, des pyridines, des pyrrolidines, des amines, des anilines, des cétones, des furannes et des pyrannes.

11. Procédé de polymérisation d'oléfines, qui comprend la polymérisation des oléfines en présence des compositions de catalyseur suivant l'une quelconque des revendications 1, 2, 3, 4, 5, 6, 7, 8, 9 et 10.